# EUROPÄISCHE PATENTSCHRIFT

(11) **EP 4 008 943 B1**
(45) Veröffentlichungstag und Bekanntmachung des Hinweises auf die Patenterteilung: **06.05.2026**
(21) Anmeldenummer: 21206871.2
(22) Anmeldetag: 08.11.2021
(51) Int. Cl.: F16K 31/60, F16K 37/00

(54) **ERFASSUNGSEINRICHTUNG UND VERFAHREN ZUM ERFASSEN DER STELLUNG EINES VERSTELLBAREN STELLELEMENTS**
DETECTION DEVICE AND METHOD FOR DETECTING THE POSITION OF AN ADJUSTABLE POSITIONING ELEMENT
DISPOSITIF DE DÉTECTION ET PROCÉDÉ DE DÉTECTION DE LA POSITION D'UN ÉLÉMENT DE RÉGLAGE RÉGLABLE

(30) Priorität: 07.12.2020 DE 102020215431
(43) Veröffentlichungstag der Anmeldung: 08.06.2022
(73) Patentinhaber: Pepperl+Fuchs SE, 68307 Mannheim (DE)
(72) Erfinder: EHRENFRIED, Ulrich, 12277 Berlin (DE); DE MÜR, Gernot, 12277 Berlin (DE)
(74) Vertreter: Fischer, Uwe

(56) Entgegenhaltungen:
- WO-A1-2019/216771
- US-A1- 2017 321 798
- US-B2- 10 445 681
- US-B2- 6 721 625
- MERRIAUX PIERRE ET AL: "The VIKINGS Autonomous Inspection Robot: Competing in the ARGOS Challenge", IEEE ROBOTICS & AUTOMATION MAGAZINE, IEEE SERVICE CENTER, PISCATAWAY, NJ, US, vol. 26, no. 1, 1 March 2019 (2019-03-01), pages 21 - 34, XP011713838, ISSN: 1070-9932, [retrieved on 20190309], DOI: 10.1109/MRA.2018.2877189

## Beschreibung

Die Erfindung bezieht sich unter anderem auf ein Verfahren zum Erfassen der Stellung eines verstellbaren Stellelements einer technischen Stelleinrichtung einer prozesstechnischen Anlage unter Bildung einer die Stellung des Stellelements angebenden Stellungsangabe.

Eine Erfassungseinrichtung, die ein Verfahren zum Erfassen der Stellung eines verstellbaren Stellelements ausführen kann und für den Einsatz bei einem Ventil als Stelleinrichtung ausgelegt ist, wird beispielsweise von der Firma TWTG R&D B.V. unter dem Produktnamen "NEON Valve Sensor" angeboten. Die vorbekannte Erfassungseinrichtung umfasst einen Magnetfeldsensor zur Erfassung der Stellung des Stellelements und eine LoRaWAN-Schnittstelle zum Übertragen der Stellungsangabe an eine übergeordnete Zentraleinrichtung.

Eine Erfassungseinrichtung, die ein Verfahren gemäß dem Oberbegriff des Patentanspruchs 1 ausführen kann, ist in der Druckschrift "The VIKINGS Autonomous Inspection Robot: Competing in the ARGOS Challenge" (Merriaux Pierre, Rossi Romain, Boutteau Remi, Vauchey Vincent, Qin Lei, Chanuc Pailin, Rigaud Florent, Roger Florent, Decoux Benoit, Savatier Xavier; IEEE ROBOTICS & AUTOMATION MAGAZINE, 20190301 IEEE SERVICE CENTER, PISCATAWAY, NJ, US - ISSN 1070-9932; Vol:26, Nr:1, Pages: 21 - 34) offenbart.

Der Erfindung liegt die Aufgabe zugrunde, ein Verfahren zum Erfassen der Stellung eines verstellbaren Stellelements anzugeben, das sich mit geringem technischem Aufwand durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Ein wesentlicher Vorteil des erfindungsgemäßen Verfahrens ist darin zu sehen, dass sich dieses ohne Eingriff in die technische Stelleinrichtung und ohne Montage von Zusatzkomponenten an der Stelleinrichtung durchführen lässt.

Ein weiterer wesentlicher Vorteil des erfindungsgemäßen Verfahrens besteht darin, dass sich dieses ohne Kontakt mit der technischen Stelleinrichtung, also ggf. mit einem gewissen Sicherheitsabstand durchführen lässt. Letzterer Aspekt kann insbesondere in einem Umfeld mit explosiven Stoffen von Vorteil sein.

Einfach und damit vorteilhaft lässt sich die Stellungsangabe auf der Basis der digitalen Bilddaten gewinnen, wenn an dem Stellelement eine Markierung angebracht ist und die Stellung des Stellelements anhand oder zumindest auch anhand der Ausrichtung der Markierung gebildet wird.

Die Bildauswertungssoftware kann in vorteilhafter Weise auf künstlicher Intelligenz beruhen. Beispielsweise kann eine Mehrzahl an Bildern des Stellelements in verschiedenen bekannten Stellungen aufgenommen werden und ein Anlernen bezüglich der Bildung der Stellungsangabe durchgeführt werden; Anlernverfahren im Zusammenhang mit künstlicher Intelligenz sind heutzutage allgemein bekannt, sodass diesbezüglich auf die einschlägige Literatur verwiesen sei.

Als vorteilhaft erwähnt sei hier lediglich die sogenannte Stützvektormethode (fachsprachlich "Support Vector Machine"), bei der als Ausgangsbasis für den Bau der "Support Vector Machine" eine Menge von Trainingsobjekten (hier Bilddaten), für die jeweils bekannt ist, welcher Klasse sie angehören bzw. welche Stellung des Stellelements tatsächlich vorliegt, herangezogen wird. Jedes Objekt, hier also in Form von Bilddaten, wird durch einen Vektor in einem Vektorraum repräsentiert. Aufgabe der "Support Vector Machine" ist es, in diesen Raum eine Hyperebene einzupassen, die als Trennfläche fungiert und die Trainingsobjekte in zumindest zwei Klassen, die beispielsweise die geschlossene und offene Stellung des Stellelements definieren, teilt.

Besonders vorteilhaft ist es, wenn die am Stellelement angebrachte Markierung eine Codierung trägt, die die Stelleinrichtung und/oder das Stellelement identifiziert. Bei einer solchen Ausgestaltung hat die Markierung eine Doppelfunktion, denn sie ermöglicht sowohl die Erkennung der Stellung als auch gleichzeitig die Identifikation des Stellelements, sodass stets feststeht, auf welches Stellelement sich die jeweilige Stellungsangabe bezieht und somit Verwechselungen vermieden werden.

Die Codierung wird vorzugsweise durch einen Strich- oder Barcode oder einen zweidimensionalen Code gebildet.

Auch bei der Auswertung auf der Basis zweier Markierungen kann die Bildauswertungssoftware in vorteilhafter Weise auf künstlicher Intelligenz beruhen, wie dies oben bereits erläutert wurde.

Auch ist es besonders vorteilhaft, wenn die am Stellelement angebrachte Markierung und die weitere Markierung jeweils eine Codierung tragen, die jeweils die Stelleinrichtung und/oder das Stellelement identifizieren, und die relative Ausrichtung zwischen der am Stellelement angebrachten Markierung und der weiteren Markierung ausschließlich dann zur Erzeugung der Stellungsangabe herangezogen wird, wenn beide Codierungen jeweils dieselbe Stelleinrichtung und/oder dasselbe Stellelement identifizieren.

Ist gemäß einem Beispiel zum besseren Verständnis der Erfindung, jedoch nicht zur Erfindung gehörend, keine weitere Markierung vorhanden, so wird die Stellung des Stellelements vorzugsweise anhand oder zumindest auch anhand einer Ausrichtungsangabe, die die horizontale Ausrichtung der Bildaufnahmeeinrichtung während der Erzeugung der digitalen Bilddaten angibt, gebildet. Auch bei der Auswertung auf der Basis der räumlichen Ausrichtung der Bildaufnahmeeinrichtung kann die Bildauswertungssoftware in vorteilhafter Weise auf künstlicher Intelligenz beruhen, wie dies oben bereits erläutert wurde.

Ist gemäß einem Beispiel zum besseren Verständnis der Erfindung, jedoch nicht zur Erfindung gehörend, überhaupt keine Markierung vorhanden, also auch keine auf dem Stellelement, so wird die Stellung des Stellelements vorzugsweise anhand der Ausrichtung des Stellelements relativ zu der räumlichen Ausrichtung der Bildaufnahmeeinrichtung während der Erzeugung der digitalen Bilddaten ermittelt. Auch bei der Auswertung auf der Basis der räumlichen Ausrichtung des Stellelements sowie der räumlichen Ausrichtung der Bildaufnahmeeinrichtung kann die Bildauswertungssoftware in vorteilhafter Weise auf künstlicher Intelligenz beruhen, wie dies oben bereits erläutert wurde.

Das Verfahren kann in vorteilhafter Weise von Wartungs- oder Servicepersonal unter Einbezug eines Mobilfunkendgeräts genutzt werden. Um dies einfach und kostengünstig zu ermöglichen, wird es als vorteilhaft angesehen, wenn zumindest die Bildaufnahmeeinrichtung in einem Mobilfunkendgerät integriert ist bzw. mit anderen Worten eine Kamera eines Mobilfunkendgeräts als Bildaufnahmeeinrichtung der Erfassungseinrichtung genutzt wird. Wartungs- oder Servicepersonal braucht mit dem Mobilfunkendgerät lediglich die Stellelemente der Stelleinrichtungen der prozesstechnischen Anlage zu fotografieren; die Auswertung der Bilddaten und die Erzeugung der Stellungsangaben erfolgt fehlerarm oder sogar fehlerfrei automatisch im Hintergrund.

Bei einer ersten bevorzugten Ausgestaltung der letztgenannten "Smartphone"-Variante ist vorgesehen, dass auch die Recheneinrichtung, die die Stellungsangabe ermittelt, in dem Mobilfunkendgerät integriert ist und die Stellungsangabe im Mobilfunkendgerät unter Einbezug eines die Bildauswertungssoftware enthaltenen Softwaremoduls, insbesondere einer App, des Mobilfunkendgeräts ermittelt wird.

Bei einer anderen zweiten bevorzugten Ausgestaltung der "Smartphone"-Variante ist vorgesehen, dass die Recheneinrichtung, die die Stellungsangabe ermittelt, in einer vom Mobilfunkendgerät getrennten Zentraleinrichtung, bei der es sich beispielsweise um eine Leitzentrale der prozesstechnischen Einrichtung handeln kann, integriert ist. Bei der letztgenannten Ausgestaltung dient das Mobilfunkendgerät also vorzugsweise nur zur Erfassung der Rohdaten (Bilddaten, so vorhanden Ausrichtungsangaben, usw.). Die Erfassungseinrichtung ist also auf zwei räumlich getrennte Komponenten aufgeteilt, nämlich in einen Teil vor Ort, der im Mobilfunkendgerät integriert ist und die Bildaufnahmeeinrichtung umfasst, und einen entfernten Teil, der in der Zentraleinrichtung integriert ist und die Recheneinrichtung und die Bildauswertungssoftware umfasst.

Die Zentraleinrichtung kann durch eine Cloudfunktionalität in einer Cloud gebildet sein.

Das Mobilfunkendgerät übermittelt bei der ersten bevorzugten Ausgestaltung der "Smartphone"-Variante vorzugsweise die Stellungsangabe per Mobilfunk an die Zentraleinrichtung und bei der zweiten bevorzugten Ausgestaltung der "Smartphone"-Variante vorzugsweise zumindest die Bilddaten.

Das Mobilfunkendgerät überträgt die Bilddaten und/oder die Stellungsangabe vorzugsweise unmittelbar nach Erzeugung der Bilddaten und/oder Stellungsangabe an die Zentraleinrichtung. Im Falle einer fehlenden Mobilfunkverbindung erfolgt die Übermittlung vorzugsweise nach einer Zwischenspeicherung im Mobilfunkendgerät und nach Wiederherstellung der Mobilfunkverbindung.

Die Stellungsangabe zeigt vorzugsweise an, ob das Stellelement eine geschlossene Stellung, eine geöffnete Stellung oder eine Zwischenstellung einnimmt, und/oder beschreibt vorzugsweise einen Stellwinkel des Stellelements quantitativ.

Die technische Stelleinrichtung ist vorzugsweise ein Ventil und das Stellelement ein Ventilbetätigungselement.

Die Erfindung bezieht sich außerdem auf eine Erfassungseinrichtung zum Erfassen der Stellung eines verstellbaren Stellelements einer technischen Stelleinrichtung unter Bildung einer die Stellung des Stellelements angebenden Stellungsangabe. Erfindungsgemäß sind die kennzeichnenden Merkmale des Patentanspruchs 11 vorgesehen.

Die Bildauswertungssoftware kann - wie oben erwähnt - in vorteilhafter Weise auf künstlicher Intelligenz beruhen und beispielsweise auf einer Stützvektormethode basieren.

Bei einer bevorzugten Ausgestaltung der Erfassungseinrichtung ist vorgesehen, dass die Bildaufnahmeeinrichtung, die Bildauswertungssoftware und die Recheneinrichtung, die die Stellungsangabe ermittelt, in einem Mobilfunkendgerät integriert sind. Besonders bevorzugt wird die Erfassungseinrichtung insgesamt also allein durch ein Mobilfunkendgerät gebildet.

Bei einer anderen bevorzugten Ausgestaltung ist vorgesehen, dass die Bildaufnahmeeinrichtung in einem Mobilfunkendgerät integriert ist und die Bildauswertungssoftware und die Recheneinrichtung, die die Stellungsangabe ermittelt, in einer Zentraleinrichtung integriert sind. Bei der letztgenannten Ausgestaltung ist die Erfassungseinrichtung also auf zwei räumlich getrennte Komponenten aufgeteilt, nämlich in einen Teil vor Ort, der im Mobilfunkendgerät integriert ist, und einen entfernen Teil, der in der Zentraleinrichtung integriert ist. Die beiden Teile, also das Mobilfunkendgerät und die Recheneinrichtung können vorzugsweise in einer Mobilfunkverbindung stehen, über die die Bilddaten der Bildaufnahmeeinrichtung zu der Zentraleinrichtung übermittelt werden.

Die Erfindung wird nachfolgend anhand von Ausführungsbeispielen näher erläutert; dabei zeigen beispielhaft
- Figur 1: ein Ausführungsbeispiel für eine Anordnung mit einer Stelleinrichtung und einer Erfassungseinrichtung, die durch ein Mobilfunkendgerät gebildet bzw. in dieses integriert ist, wobei die Figur 1 die geschlossene Stellung des Stellelements zeigt,
- Figur 2: das Ausführungsbeispiel gemäß Figur 2, wobei die offene Stellung des Stellelements gezeigt ist,
- Figur 3: ein Ausführungsbeispiel für eine Anordnung mit einer Stelleinrichtung und einer Erfassungseinrichtung, die zum Teil in einem Mobilfunkendgerät und zum Teil in einer Zentraleinrichtung implementiert ist,
- Figur 4: ein Ausführungsbeispiel für eine Anordnung mit einer Erfassungseinrichtung und einer Stelleinrichtung, an der zwei Codierungen angebracht sind,
- Figur 5: ein Ausführungsbeispiel für eine Anordnung mit einer Erfassungseinrichtung und einer Stelleinrichtung, bei der eine Codierung an einem Stelleelement angebracht ist, wobei die Erfassungseinrichtung die Codierung an dem Stelleelement bzw. deren Lage sowie eine weitere Codierung, die an einer Wand angebracht ist, berücksichtigt, und
- Figur 6: ein Ausführungsbeispiel für eine Anordnung mit einer Stelleinrichtung und einer Erfassungseinrichtung, die ohne Berücksichtigung von Codierungen arbeitet.

In den Figuren werden der Übersicht halber für identische oder vergleichbare Komponenten stets dieselben Bezugszeichen verwendet.

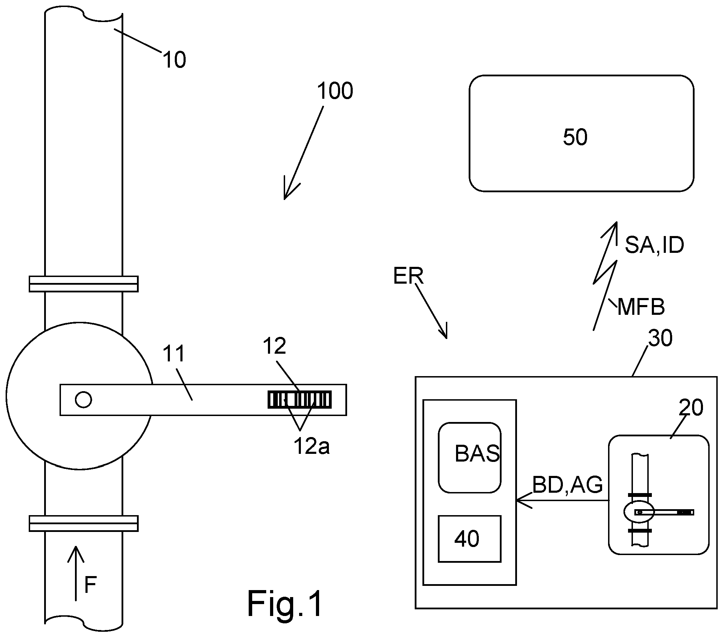

Die Figur 1 zeigt ein Ausführungsbeispiel für eine technische Stelleinrichtung 10 in Form eines Ventils, das mit einem Stellelement 11 in Form eines Ventilhebels als Ventilbetätigungselement ausgestattet ist. Die Stelleinrichtung 10 bildet einen Bestandteil einer nicht weiter gezeigten prozesstechnischen Anlage 100. Die Figur 1 zeigt die geschlossene Stellung des Stellelements 11, bei der ein Durchfluss eines Fluids F durch die Stelleinrichtung 10 blockiert ist.

An dem Stellelement 11 ist eine Codierung 12 angebracht, die die Stelleinrichtung 10 und damit das Stellelement 11 eindeutig identifiziert. Bei dem Ausführungsbeispiel gemäß Figur 1 wird die Codierung 12 durch einen Strichcode gebildet, dessen Codierstriche 12a bzw. Codierbalken in der geschlossenen Stellung des Stellelements 11 beispielsweise senkrecht ausgerichtet sind.

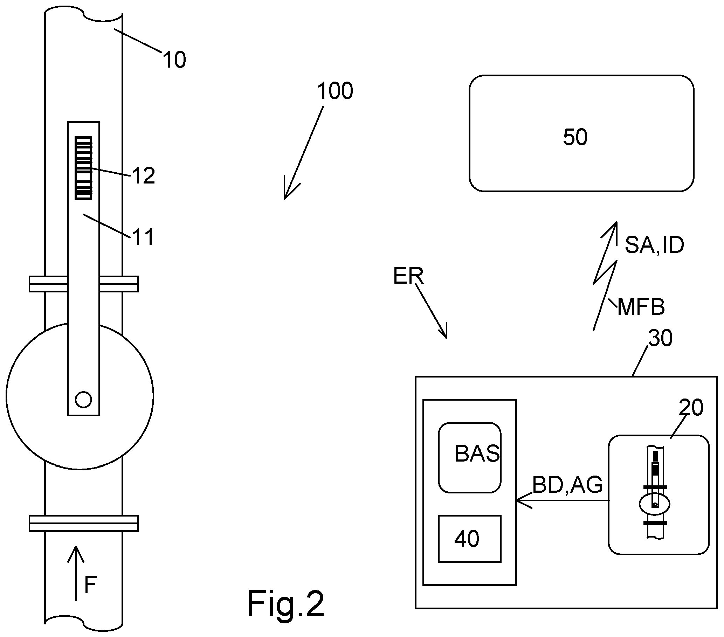

Die Figur 2 zeigt die Stelleinrichtung 10 gemäß Figur 1 in der offenen Stellung des Stellelements 11, bei der ein Durchfluss des Fluids F durch die Stelleinrichtung 10 möglich ist.

Es lässt sich erkennen, dass das Verstellen des Stellelements 11 von der in der Figur 1 gezeigten geschlossenen Stellung in die in der Figur 2 gezeigte offene Stellung und umgekehrt jeweils durch ein Schwenken um 90 Grad erfolgt.

Die Figuren 1 und 2 lassen außerdem erkennen, dass durch das Verschwenken des Stellelements 11 auch die Ausrichtung der Codierstriche 12a der Codierung 12 um 90 Grad verschwenkt wird; die Codierstriche 12a sind in der offenen Stellung des Stellelements 11 horizontal ausgerichtet.

Die Figuren 1 und 2 zeigen darüber hinaus eine Bildaufnahmeeinrichtung 20 zum Aufnehmen von digitalen Bilddaten BD, die ein Abbild des Stellelements 11 repräsentieren. Die Bildaufnahmeeinrichtung 20 kann beispielsweise in einem Mobilfunkendgerät 30 integriert sein.

Bei dem Ausführungsbeispiel gemäß den Figuren 1 und 2 ist in dem Mobilfunkendgerät 30 außerdem eine Recheneinrichtung 40 integriert, die mittels Bildauswertungssoftware BAS dazu programmiert ist, die digitalen Bilddaten BD unter Bildung einer die Stellung des Stellelements 11 angebenden Stellungsangabe SA auszuwerten. Das Mobilfunkendgerät 30 allein bildet somit ein Ausführungsbeispiel für eine erfindungsgemäße Erfassungseinrichtung ER zum Erfassen der Stellung des verstellbaren Stellelements 11. Die Bildauswertungssoftware BAS kann beispielsweise auf künstlicher Intelligenz beruhen und durch Beispielbilder oder Beispieldaten angelernt werden..

Vorteilhaft ist es, wenn die Bildauswertungssoftware BAS derart ausgebildet ist, dass sie die Ausrichtung der Codierstriche 12a der Codierung 12 erfasst und anhand der Ausrichtung, die in der geschlossenen Stellung des Stellelements 11 senkrecht und in der offenen Stellung horizontal ist, die Stellungsangabe SA erzeugt. Bei der Ermittlung der räumlichen Ausrichtung der Codierstriche 12a wird vorzugsweise eine Ausrichtungsangabe AG, die die räumliche Ausrichtung der Bildaufnahmeeinrichtung 20 während der Erzeugung der digitalen Bilddaten BD angibt, beispielsweise in Form eines Winkels relativ zur Horizontalen, herangezogen.

Auch kann die Bildauswertungssoftware BAS derart ausgebildet sein, dass sie die Ausrichtung der Codierstriche 12a der Codierung 12 unter Bildung einer Stellwinkelangabe, die den jeweiligen Stellwinkel des Stellelements 11 quantitativ beschreibt, auswertet, beispielsweise um Zwischenstellungen des Stellelements 11 erfassen und in der Stellungsangabe SA angeben zu können.

Nach dem Ermitteln der Stellungsangabe SA übermittelt das Mobilfunkendgerät 30 diese vorzugsweise gemeinsam mit einer das Stellelement 11 und/oder die Stelleinrichtung 10 identifizierenden Angabe ID an eine Zentraleinrichtung, bei der es sich beispielsweise um eine Leitzentrale 50 der prozesstechnischen Anlage 100 handeln kann; die Übermittlung erfolgt vorzugsweise über eine Mobilfunkverbindung MFB unmittelbar nach Erzeugung der Stellungsangabe SA oder sobald der Aufbau einer Mobilfunkverbindung MFB möglich ist.

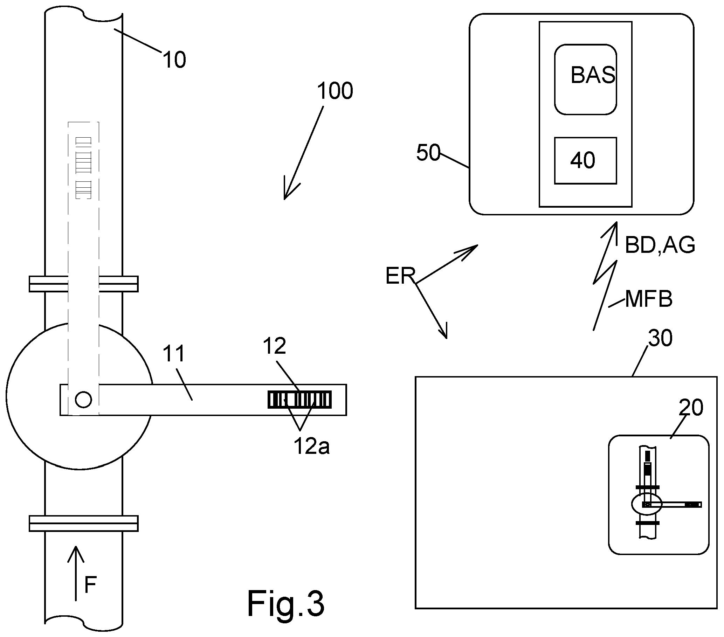

Bei dem Ausführungsbeispiel gemäß den Figuren 1 und 2 ermittelt das Mobilfunkendgerät 30 selbst die Stellungsangabe SA; alternativ kann vorgesehen sein, dass das Mobilfunkendgerät 30 lediglich die digitalen Bilddaten BD erfasst und diese an die Leitzentrale 50 der prozesstechnischen Anlage 100 übermittelt, wie beispielhaft in der Figur 3 gezeigt ist. Bei der letztgenannten Variante sind die Recheneinrichtung 40 und die Bildauswertungssoftware BAS vorzugsweise in der Leitzentrale 50 integriert.

Das aus der die Bilddaten BD erfassenden Bildaufnahmeeinrichtung 20, der Recheneinrichtung 40 und der Bildauswertungssoftware BAS gebildete Ausführungsbeispiel für eine erfindungsgemäße Erfassungseinrichtung ER ist somit auf zwei räumlich getrennte Komponenten verteilt, die über eine Mobilfunkverbindung MFB in Kontakt stehen oder zumindest in Kontakt gebracht werden können. Im Übrigen gelten die obigen Ausführungen im Zusammenhang mit den Figuren 1 und 2 für das Ausführungsbeispiel gemäß Figur 3 entsprechend.

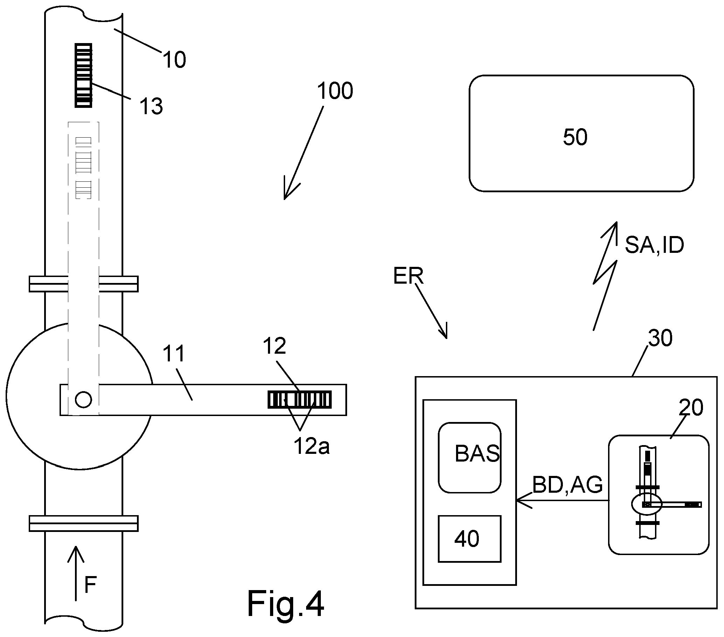

Die Figur 4 zeigt ein drittes Ausführungsbeispiel für eine technische Stelleinrichtung 10 mit einem Stellelement 11, dessen Stellung mittels einer Erfassungseinrichtung ER erfasst wird. Im Unterschied zu den Ausführungsbeispielen gemäß den Figuren 1 bis 3 ist bei dem Ausführungsbeispiel gemäß Figur 4 und erfindungsgemäß an einem beim Verstellen des Stellelements 11 unbeweglichen Abschnitt der Stelleinrichtung 10 eine weitere Markierung angebracht, die vorzugsweise mit der Codierung 12 am Stellelement 11 identisch ist und eine weitere Codierung 13 bildet.

Bei dem Ausführungsbeispiel gemäß Figur 4 ist die Bildauswertungssoftware BAS derart ausgebildet, dass sie die Ausrichtung der beiden Codierungen 12 und 13 relativ zueinander erfasst: Sind die Codierungen 12 und 13 senkrecht zueinander ausgerichtet, so wird die geschlossenen Stellung des Stellelements 11 festgestellt; sind die Codierungen 12 und 13 parallel zueinander ausgerichtet, so wird die offene Stellung des Stellelements 11 ermittelt. Vorzugsweise wird die Stellungsangabe SA nur dann erzeugt, wenn festgestellt wird, dass die Codierungen 12 und 13 identisch sind; andernfalls wird vorzugsweise ein Fehlersignal erzeugt.

Bei dem Ausführungsbeispiel gemäß Figur 4 ist die Erfassungseinrichtung ER zur Bildung der Stellungsangabe SA - wie bei dem Ausführungsbeispiel gemäß den Figuren 1 und 2 - allein durch das Mobilfunkendgerät 30 gebildet; alternativ kann die Erfassungseinrichtung ER auf das Mobilfunkendgerät 30 und die Leitzentrale 50 verteilt sein kann, wie im Zusammenhang mit der Figur 3 erläutert wurde. Im Übrigen gelten die obigen Ausführungen im Zusammenhang mit den Figuren 1 bis 3 für das Ausführungsbeispiel gemäß Figur 4 entsprechend.

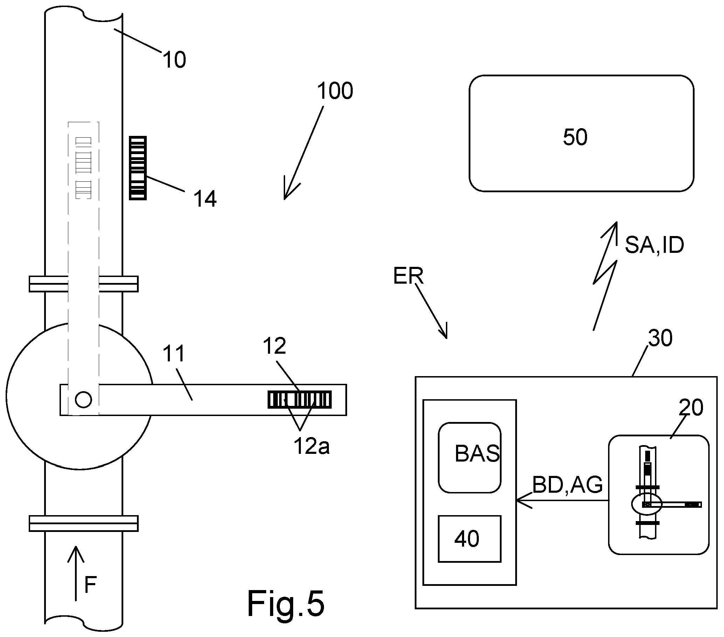

Die Figur 5 zeigt ein viertes Ausführungsbeispiel für eine technische Stelleinrichtung 10 mit einem Stellelement 11, dessen Stellung mittels einer Erfassungseinrichtung ER erfasst wird. Im Unterschied zu dem Ausführungsbeispiel gemäß Figur 4 ist bei dem Ausführungsbeispiel gemäß Figur 5 eine weitere Codierung 14, die vorzugsweise mit der Codierung 12 am Stellelement 11 identisch ist, an einer festen Stelle getrennt von der Stelleinrichtung 10 angebracht, beispielsweise an einer Wand. Die Erfassungseinrichtung ER ermittelt die Ausrichtungen zwischen den Codierungen 12 und 14 und erzeugt in Abhängigkeit von der relativen Ausrichtung die Stellungsangabe SA, vorzugsweise jedoch nur dann, wenn festgestellt wird, dass die Codierungen 12 und 14 identisch sind; andernfalls wird vorzugsweise ein Fehlersignal erzeugt.

Im Übrigen gelten die obigen Ausführungen im Zusammenhang mit der Figur 4 für das Ausführungsbeispiel gemäß Figur 5 entsprechend. So können beispielsweise die Bildauswertungssoftware BAS und die Recheneinrichtung 40 im Mobilfunkendgerät 30, wie in Figur 5 gezeigt, und/oder in der Leitzentrale 50 integriert sein, wie im Zusammenhang mit der Figur 3 erläutert wurde.

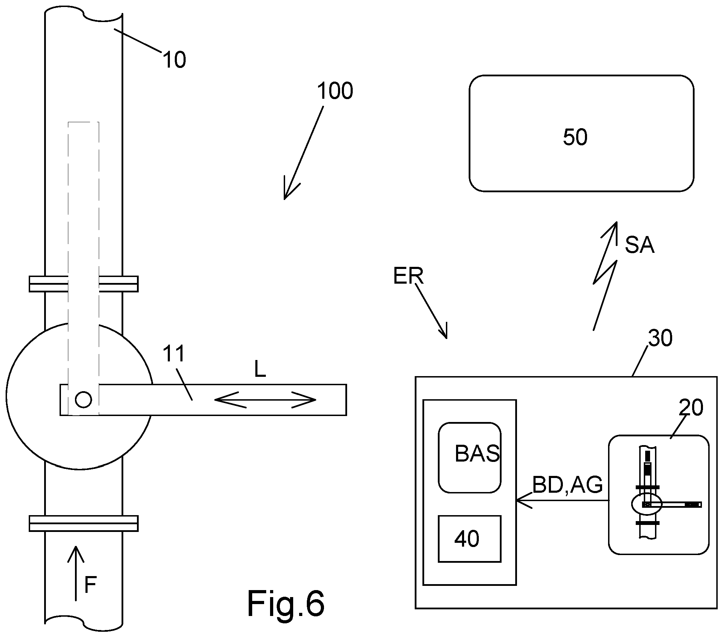

Die Figur 6 zeigt ein fünftes Ausführungsbeispiel für eine technische Stelleinrichtung 10 mit einem Stellelement 11, dessen Stellung mittels einer Erfassungseinrichtung ER erfasst wird. Bei der Erfassungseinrichtung ER gemäß der Figur 6 ist die Bildauswertungssoftware BAS derart ausgebildet, dass sie die Stellungsangabe SA allein anhand der horizontalen Orientierung der Längsrichtung L des Stellelements 11 relativ zur horizontalen Ausrichtung der Bildaufnahmeeinrichtung 20, die durch die Ausrichtungsangabe AG definiert wird, beispielsweise in Form eines Winkels relativ zur Horizontalen, ermittelt.

Weiter kann bei der Erfassungseinrichtung ER gemäß der Figur 6 die Bildauswertungssoftware BAS derart ausgebildet sein, dass sie die Stellungsangabe SA allein anhand der horizontalen Orientierung der Längsrichtung L des Stellelements 11 relativ zur Ausrichtung markanter Anlagenteile, wie der zum Ventil führenden Rohre, beispielsweise in Form eines Winkels relativ zur Horizontalen, ermittelt.

Die Bildelemente, deren Kanten als Bezugslinien dienen sollen, werden der Bildauswertungssoftware BAS, z.B. durch Anlernen mitgeteilt.

Die Stellungsangabe SA kann beispielsweise in Form eines Winkels relativ zur Horizontalen ausgegeben werden. Eine Codierung des Stellelements 11 oder der Stelleinrichtung 10 ist bei dem Ausführungsbeispiel gemäß Figur 6 nicht vorhanden, sodass auch keine identifizierende Angabe ID an die Zentraleinrichtung übermittelt wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Stelleinrichtung
- 11: Stellelement
- 12: Codierung
- 12a: Codierstriche
- 13: weitere Codierung
- 14: weitere Codierung
- 20: Bildaufnahmeeinrichtung
- 30: Mobilfunkendgerät
- 40: Recheneinrichtung
- 50: Leitzentrale / Zentraleinrichtung
- 100: prozesstechnische Anlage

- AG: Ausrichtungsangabe
- BAS: Bildauswertungssoftware
- BD: Bilddaten
- ER: Erfassungseinrichtung
- F: Fluid
- ID: identifizierende Angabe
- L: Längsrichtung
- MFB: Mobilfunkverbindung
- SA: Stellungsangabe

## Patentansprüche

1. Verfahren zum Erfassen der Stellung eines verstellbaren Stellelements (11) einer technischen Stelleinrichtung (10) einer prozesstechnischen Anlage (100) unter Bildung einer die Stellung des Stellelements (11) angebenden Stellungsangabe (SA),
wobei
- mit einer Bildaufnahmeeinrichtung (20) digitale Bilddaten (BD), die ein Abbild des Stellelements (11) oder zumindest eines Teils des Stellelements (11) umfassen, erzeugt werden, und
- die digitalen Bilddaten (BD) mit einer mittels Bildauswertungssoftware (BAS) programmierten Recheneinrichtung (40) unter Bildung der Stellungsangabe (SA) ausgewertet werden, **dadurch gekennzeichnet, dass**
- an dem Stellelement (11) eine von den digitalen Bilddaten (BD) erfasste Markierung angebracht ist,
- an einem beim Verstellen des Stellelements (11) unbeweglichen Abschnitt der Stelleinrichtung (10) oder an einem anderen unbeweglichen Objekt in der Nähe des Stellelements (11) eine weitere von den digitalen Bilddaten (BD) erfasste Markierung angebracht ist, und die Stellung des Stellelements (11) anhand oder zumindest auch anhand einer relativen Ausrichtung zwischen der am Stellelement (11) angebrachten Markierung und der weiteren Markierung mit der mittels der Bildauswertungssoftware (BAS) programmierten Recheneinrichtung (40) und den digitalen Bilddaten (BD) ermittelt wird.

2. Verfahren nach Anspruch 1,
**dadurch gekennzeichnet, dass**
die am Stellelement (11) angebrachte Markierung eine Codierung (12) trägt, die die Stelleinrichtung (10) und/oder das Stellelement (11) identifiziert.

3. Verfahren nach Anspruch 2,
**dadurch gekennzeichnet, dass**
die Codierung (12) durch einen Strichcode oder einen zweidimensionalen Code gebildet wird.

4. Verfahren nach einem der voranstehenden Ansprüche,
**dadurch gekennzeichnet, dass**
- die am Stellelement (11) angebrachte Markierung und die weitere Markierung jeweils eine Codierung (12, 13, 14) tragen, die jeweils die Stelleinrichtung (10) und/oder das Stellelement (11) identifizieren, und
- die relative Ausrichtung zwischen der am Stellelement (11) angebrachten Markierung und der weiteren Markierung ausschließlich dann zur Erzeugung der Stellungsangabe (SA) herangezogen wird, wenn beide Codierungen (12, 13, 14) jeweils dieselbe Stelleinrichtung (10) und/oder dasselbe Stellelement (11) identifizieren.

5. Verfahren nach einem der voranstehenden Ansprüche,
**dadurch gekennzeichnet, dass**
die Stellung des Stellelements (11) anhand oder zumindest auch anhand einer Ausrichtungsangabe (AG), die die räumliche Ausrichtung der Bildaufnahmeeinrichtung (20) während der Erzeugung der digitalen Bilddaten (BD) angibt, gebildet wird.

6. Verfahren nach einem der voranstehenden Ansprüche,
**dadurch gekennzeichnet, dass**
die Bildaufnahmeeinrichtung (20) in einem Mobilfunkendgerät (30) integriert ist und die Bilddaten (BD) und/oder die Stellungsangabe (SA) per Mobilfunk an eine Zentraleinrichtung (50) übermittelt werden, sei es unmittelbar nach Erzeugung der Bilddaten (BD) oder, insbesondere im Falle einer fehlenden Mobilfunkverbindung (MFB), nach einer Zwischenspeicherung im Mobilfunkendgerät (30).

7. Verfahren nach Anspruch 6,
**dadurch gekennzeichnet, dass**
- die Recheneinrichtung (40), die die Stellungsangabe (SA) ermittelt, in dem Mobilfunkendgerät (30) integriert ist und
- die Stellungsangabe (SA) unter Einbezug eines die Bildauswertungssoftware (BAS) enthaltenen Softwaremoduls, insbesondere einer App, des Mobilfunkendgeräts (30) im Mobilfunkendgerät (30) ermittelt wird.

8. Verfahren nach einem der voranstehenden Ansprüche,
**dadurch gekennzeichnet, dass**
- die Bildauswertungssoftware (BAS) und die Recheneinrichtung (40), die die Stellungsangabe (SA) ermittelt, in einer Zentraleinrichtung (50)) integriert sind und
- die Stellungsangabe (SA) in der Zentraleinrichtung (50) ermittelt wird.

9. Verfahren nach einem der voranstehenden Ansprüche,
**dadurch gekennzeichnet, dass**
die Stellungsangabe (SA) anzeigt, ob das Stellelement (11) eine geschlossene Stellung, eine geöffnete Stellung oder eine Zwischenstellung einnimmt, und/oder einen Stellwinkel des Stellelements (11) quantitativ beschreibt.

10. Verfahren nach einem der voranstehenden Ansprüche, **dadurch gekennzeichnet, dass**
die technische Stelleinrichtung (10) ein Ventil und das Stellelement (11) ein Ventilbetätigungselement ist.

11. Erfassungseinrichtung (ER) zum Erfassen der Stellung eines verstellbaren Stellelements (11) einer technischen Stelleinrichtung (10) unter Bildung einer die Stellung des Stellelements (11) angebenden Stellungsangabe (SA),
wobei
die Erfassungseinrichtung (ER) aufweist:
- eine Bildaufnahmeeinrichtung (20) zum Aufnehmen von digitalen Bilddaten (BD), die ein Abbild des Stellelements (11) oder zumindest eines Teils des Stellelements (11) repräsentieren, und
eine Recheneinrichtung (40), die mittels Bildauswertungssoftware (BAS) dazu programmiert ist, die digitalen Bilddaten (BD) unter Bildung der Stellungsangabe (SA) auszuwerten, **dadurch gekennzeichnet, dass**
- die Recheneinrichtung (40) mittels der Bildauswertungssoftware (BAS) dazu programmiert ist, die Stellung des Stellelements (11) anhand oder zumindest auch anhand einer relativen Ausrichtung zwischen einer am Stellelement (11) angebrachten und von den digitalen Bilddaten (BD) erfassten Markierung und einer weiteren und von den digitalen Bilddaten (BD) erfassten Markierung zu ermitteln, die an einem beim Verstellen des Stellelements (11) unbeweglichen Abschnitt der Stelleinrichtung (10) oder an einem anderen unbeweglichen Objekt in der Nähe des Stellelements (11) angebracht ist.

## Claims

1. A method for detecting the position of an adjustable positioning element (11) in a technical positioning device (10) of a processing facility (100) to form a position specification (SA) specifying the position of the positioning element (11),
wherein
- digital image data (BD), which comprise a depiction of the positioning element (11) or at least a part of the positioning element (11), are generated using an image recording device (20), and
- the digital image data (BD) are evaluated using a computing device (40) programmed by means of image evaluation software (BAS) to form the
position specification (SA),
**characterized in that**
- a marking detected by the digital image data (BD) is attached to the positioning element (11),
a further marking detected by the digital image data (BD) is attached to a section of the positioning device (10) immobile during the adjustment of the positioning element (11) or to another immobile object in the vicinity of the positioning element (11), and the position of the positioning element (11) is determined on the basis of or at least also on the basis of a relative alignment between the marking attached to the positioning element (11) and the further marking using the computing device (40) programmed by means of the image evaluation software (BAS) and the digital image data (BD).

2. The method as claimed in claim 1,
**characterized in that**
the marking attached to the positioning element (11) bears a code (12) that identifies the positioning device (10) and/or the positioning element (11).

3. The method as claimed in claim 2,
**characterized in that**
the code (12) is formed by a barcode or a two-dimensional code.

4. The method as claimed in any one of the preceding claims,
**characterized in that**
- the marking attached to the positioning element (11) and the further marking each bear a code (12, 13, 14), which each identify the positioning device (10) and/or the positioning element (11), and
- the relative alignment between the marking attached to the positioning element (11) and the further marking is exclusively used to generate the position specification (SA) if both codes (12, 13, 14) each identify the same positioning device (10) and/or the same positioning element (11).

5. The method as claimed in any one of the preceding claims,
**characterized in that**
the position of the positioning element (11) is formed on the basis of or at least also on the basis of an alignment specification (AG), which specifies the spatial alignment of the image recording device (20) during the generation of the digital image data (BD).

6. The method as claimed in any one of the preceding claims,
**characterized in that**
the image recording device (20) is integrated in a mobile wireless terminal (30) and the image data (BD) and/or the position specification (SA) are transmitted via mobile wireless to a central device (50), whether directly after generating the image data (BD) or, in particular in case of an absent mobile wireless connection (MFB), after temporary storage in the mobile wireless terminal (30).

7. The method as claimed in claim 6,
**characterized in that**
- the computing device (40) which determines the position specification (SA) is integrated in the mobile wireless terminal (30) and
- the position specification (SA) is determined with incorporation of a software module containing the image evaluation software (BAS), in particular an app, of the mobile wireless terminal (30) in the mobile wireless terminal (30).

8. The method as claimed in any one of the preceding claims,
**characterized in that**
- the image evaluation software (BAS) and the computing device (40), which determines the position specification (SA), are integrated in a central device (50) and
- the position specification (SA) is determined in the central device (50).

9. The method as claimed in any one of the preceding claims,
**characterized in that**
the position specification (SA) indicates whether the positioning element (11) assumes a closed position, an open position, or an intermediate position, and/or quantitatively describes a positioning angle of the positioning element (11).

10. The method as claimed in any one of the preceding claims,
**characterized in that**
the technical positioning device (10) is a valve and the positioning element (11) is a valve operating element.

11. A detection device (ER) for detecting the position of an adjustable positioning element (11) of a technical positioning device (10) to form a position specification (SA) specifying the position of the positioning element (11),
wherein
the detection device (ER) comprises:
- an image recording device (20) for recording digital image data (BD), which represent a depiction of the positioning element (11) or at least a part of the positioning element (11), and
- a computing device (40), which is programmed by means of image evaluation software (BAS) to evaluate the digital image data (BD) to form the position specification (SA)
**characterized in that**
- the computing device (40) is programmed by means of the image evaluation software (BAS) to determine the position of the positioning element (11) on the basis of or at least also on the basis of a relative alignment between a marking attached to the positioning element (11) and detected by the digital image data (BD) and a further marking detected by the digital image data (BD), which is attached to a section of the positioning device (10) immobile during the adjustment of the positioning element (11) or to another immobile object in the vicinity of the positioning element (11).

## Revendications

1. Procédé de détection de la position d'un élément de réglage (11) réglable d'un dispositif de réglage technique (10) d'une installation technique de procédé (100) en formant une indication de position (SA) qui indique la position de l'élément de réglage (11),
- des données d'image numériques (BD), qui comprennent une représentation de l'élément de réglage (11) ou d'au moins une partie de l'élément de réglage (11), étant générées à l'aide d'un dispositif d'enregistrement d'image (20),
- les données d'image numériques (BD) étant évaluées avec un dispositif de calcul programmé au moyen d'un logiciel d'évaluation d'image (BAS) (40) en formant l'indication de position (SA), **caractérisé en ce que**
- un marquage détecté par les données d'image numériques (BD) est apposé sur l'élément de réglage (11),
- un marquage supplémentaire détecté par les données d'image numériques (BD) est apposé sur une portion immobile du dispositif de réglage (10) lors du réglage de l'élément de réglage (11) ou sur un autre objet immobile à proximité de l'élément de réglage (11), et la position de l'élément de réglage (11) est déterminée à l'aide ou au moins également à l'aide d'un alignement relatif entre le marquage apposé sur l'élément de réglage (11) et le marquage supplémentaire avec le dispositif de calcul (40) programmé au moyen du logiciel d'évaluation d'image (BAS) et les données d'image numériques (BD).

2. Procédé selon la revendication 1,
**caractérisé en ce que**,
le marquage apposé sur l'élément de réglage (11) porte un codage (12) qui identifie le dispositif de réglage (10) et/ou l'élément de réglage (11).

3. Procédé selon la revendication 2,
**caractérisé en ce que**,
le codage (12) est formé par un code à barres ou un code bidimensionnel.

4. Procédé selon l'une des revendications précédentes, **caractérisé en ce que**,
- le marquage apposé sur l'élément de réglage (11) et le marquage supplémentaire portent chacun un codage (12, 13, 14) qui identifie respectivement le dispositif de réglage (10) et/ou l'élément de réglage (11), et
- l'orientation relative entre le marquage apposé sur l'élément de réglage (11) et le marquage supplémentaire n'est utilisée exclusivement pour générer l'indication de position (SA) que lorsque les deux codages (12, 13, 14) identifient respectivement le même dispositif de réglage (10) et/ou le même élément de réglage (11).

5. Procédé selon l'une des revendications précédentes, **caractérisé en ce que**,
la position de l'élément de réglage (11) est formée à l'aide ou au moins également à l'aide d'une indication d'orientation (AG) qui indique l'orientation dans l'espace du dispositif d'enregistrement d'image (20) pendant la génération des données d'image numériques (BD).

6. Procédé selon l'une des revendications précédentes, **caractérisé en ce que**,
le dispositif d'enregistrement d'image (20) est intégré dans un terminal de radiocommunication mobile (30) et les données d'image (BD) et/ou l'indication de position (SA) sont communiquées par radiocommunication mobile à un dispositif central (50), que ce soit immédiatement après la génération des données d'image (BD) ou, en particulier en cas d'absence de connexion de radiocommunication mobile (MFB), après une mémorisation temporaire dans le terminal de radiocommunication mobile (30).

7. Procédé selon la revendication 6,
**caractérisé en ce que**,
- le dispositif de calcul (40) qui détermine l'indication position (SA) est intégré dans le terminal de radiocommunication mobile (30) et
- l'indication de position (SA) est déterminée en utilisant un module logiciel inclus dans le logiciel d'évaluation d'image (BAS), en particulier une application, du terminal de radiocommunication mobile (30) dans le terminal de radiocommunication mobile (30).

8. Procédé selon l'une des revendications précédentes, **caractérisé en ce que**,
- le logiciel d'évaluation d'image (BAS) et le dispositif de calcul (40) qui détermine l'indication de position (SA) sont intégrés dans un dispositif central (50) et
- l'indication de position (SA) est déterminée dans le dispositif central (50).

9. Procédé selon l'une des revendications précédentes, **caractérisé en ce que**,
l'indication de position (SA) indique si l'élément de réglage (11) occupe une position fermée, une position ouverte ou une position intermédiaire et/ou décrit quantitativement un angle de réglage de l'élément de réglage (11).

10. Procédé selon l'une des revendications précédentes, **caractérisé en ce que**,
le dispositif de réglage technique (10) est une vanne et l'élément de réglage (11) est un élément d'actionnement de vanne.

11. Dispositif de détection (ER) destiné à détecter la position d'un élément de réglage (11) réglable d'un dispositif de réglage technique (10) en formant une indication de position (SA) qui indique la position de l'élément de réglage (11),
le dispositif de détection (ER) possédant :
- un dispositif d'enregistrement d'image (20) destiné à enregistrer des données d'image numériques (BD) qui représentent une représentation de l'élément de réglage (11) ou d'au moins d'une partie de l'élément de réglage (11), et
un dispositif de calcul (40), qui est programmé au moyen d'un logiciel d'évaluation d'image (BAS) pour évaluer les données d'image numériques (BD) en formant l'indication de position (SA),
**caractérisé en ce que**,
- le dispositif de calcul (40) est programmé au moyen du logiciel d'évaluation d'image (BAS) pour déterminer la position de l'élément de réglage (11) à l'aide ou au moins également à l'aide d'une orientation relative entre un marquage apposé sur l'élément de réglage (11) et détecté par les données d'image numériques (BD) et un marquage supplémentaire détecté par les données d'image numérique (BD), qui est apposé sur une portion immobile du dispositif de réglage (10) lors du réglage de l'élément de réglage (11) ou sur un autre objet immobile à proximité de l'élément de réglage (11).
